# FASCICULE DE BREVET EUROPEEN

(11) **EP 2 730 487 B1**
(45) Date de publication et mention de la délivrance du brevet: **25.05.2016**
(21) Numéro de dépôt: 13184757.6
(22) Date de dépôt: 17.09.2013
(51) Int. Cl.: B62D 25/16, F16B 5/06

(54) **Organe de maintien de deux éléments de carrosserie de véhicule automobile l'un contre l'autre**
Haltebauteil für zwei gegeneinander befestigte Karosserieelemente eines Kraftfahrzeugs
Part for holding two elements of a motor vehicle body against one another

(30) Priorité: 07.11.2012 FR 1202985
(43) Date de publication de la demande: 14.05.2014
(73) Titulaire: Faurecia Bloc Avant, 92000 Nanterre (FR)
(72) Inventeur: Barneoud, Jean-Marc, 25230 VANDONCOURT (FR)
(74) Mandataire: Domenego, Bertrand

(56) Documents cités:
- DE-A1-102007 032 929
- FR-A- 927 654
- FR-A1- 2 857 314
- US-A- 4 727 629

## Description

La présente invention concerne un organe de maintien d'une première partie plane de fixation d'un premier élément, notamment d'un premier élément de carrosserie de véhicule automobile, contre une seconde partie plane de fixation complémentaire d'un second élément, notamment d'un second élément de carrosserie de véhicule automobile.

L'invention concerne plus particulièrement le maintien d'une peau de pare-chocs contre une aile de véhicule automobile.

Une peau de pare-chocs de véhicule automobile présente habituellement, à chacune de ses extrémités latérales, une première arête destinée à affleurer une seconde arête complémentaire d'une aile latérale adjacente de ce véhicule.

Afin d'autoriser la fixation de la peau de pare-chocs contre faite, ladite peau de pare-chocs comporte une première partie plane de fixation, s'étendant sensiblement perpendiculairement à la peau de pare-chocs, à proximité de la première arrête, et ladite aile comporte une seconde partie de fixation, s'étendant sensiblement perpendiculairement à l'aile, à proximité de la seconde arrête. Ces première et seconde parties planes sont destinées à être maintenues l'une contre l'autre, l'une parallèlement à l'autre, pour la fixation de la peau de pare-chocs contre l'aile.

Au cours du montage du véhicule automobile, les première et seconde parties planes de fixation sont préalablement maintenues l'une contre l'autre en vue de leur fixation, par exemple par vissage. Cette fixation est réalisée ultérieurement à l'agencement de la peau de pare-chocs contre l'aile dans la chaîne de production.

Afin de réaliser ce maintien préalable, on connaît déjà, dans l'état de la technique, un organe de maintien comportant une partie de pincement présentant une section en forme de U, comprenant une branche supérieure et une branche inférieure définissant entre elles un espace de logement pour lesdites parties planes de la peau de pare choc et de l'aile.

US 4 727 629 décrit par exemple un organe de maintien similaire à celui défini dans le préambule de la revendication 1. DE 10 2007 032929 décrit un autre exemple d'organe de maintien connu dans l'état de la technique.

Les organes de maintien connus présentent toutefois certains inconvénients. En particulier, ces organes de maintien sont parfois difficiles à mettre en oeuvre, encombrants, et/ou nécessitant la réalisation d'adaptations fastidieuse sur lesdites parties planes de la peau de pare choc et de l'aile.

L'invention a notamment pour but de remédier à ces inconvénients, en fournissant un organe de maintien efficace et simple à mettre en oeuvre.

A cet effet, l'invention a notamment pour objet un organe de maintien d'une première partie plane de fixation d'un premier élément, notamment d'un premier élément de carrosserie de véhicule automobile, contre une seconde partie plane de fixation complémentaire d'un second élément, notamment d'un second élément de carrosserie de véhicule automobile, l'organe de maintien comportant une partie de pincement présentant une section en forme de U, comprenant une branche supérieure et une branche inférieure définissant entre elles un espace de logement pour les première et seconde parties planes, caractérisé en ce que :
- l'organe de maintien comporte une partie de liaison avec la première partie plane, destinée à être reliée à cette première partie plane par une liaison pivot d'axe perpendiculaire à un plan dans lequel s'étend sensiblement ladite première partie plane,
- l'organe de maintien comporte au moins une forme d'emboîtement, destinée à coopérer avec une forme complémentaire prédéterminée du premier élément, et
- la partie de liaison comporte un manchon, destiné à entourer un élément tubulaire porté par la première partie plane, le manchon comportant au moins une patte d'encliquetage propre à coopérer avec une rainure circonférentielle complémentaire ménagée sur l'élément tubulaire.

Un organe de maintien selon l'invention peut comporter en outre l'une ou l'autre des caractéristiques suivantes, prises seules ou selon toutes combinaisons techniquement envisageables.
- Au moins l'une des branches de la partie de pincement de l'organe de maintien comporte un bossage en saillie en direction de l'espace de logement, formant une forme d'emboîtement.
- La branche supérieure présente une longueur inférieure à celle de la branche inférieure, le bossage étant porté par ladite branche inférieure.
- L'organe de maintien comprend au moins une languette élastique, formant une forme d'emboîtement.
- La languette élastique comprend au moins un coude, destiné à coopérer avec la forme complémentaire du premier élément.
- La languette s'étend sensiblement parallèlement à une direction tangentielle définie sur le manchon.

L'invention concerne également un ensemble d'un premier élément, notamment un premier élément de carrosserie de véhicule automobile, telle qu'une peau de pare-chocs, et d'un organe de maintien tel que défini précédemment, dans lequel le premier élément comporte la première partie plane de fixation, et comporte au moins une forme complémentaire de chaque forme d'emboîtement.

Il apparaît clairement que l'organe de maintien selon l'invention est simple à mettre en oeuvre, passant d'une position à l'autre par simple rotation autour de la liaison pivot. Dans sa position de dégagement, l'organe de maintien permet l'accostage de la seconde partie plane de fixation contre la première partie plane de fixation, et, dans sa position d'engagement, l'organe de maintien permet le maintien des première et seconde parties planes de fixation l'une contre l'autre.

Avantageusement, l'ensemble selon l'invention peut comporter l'une ou plusieurs des caractéristiques suivantes, prises seules ou selon toutes combinaisons techniquement envisageables.
- Au moins l'une des branches de la partie de pincement de l'organe de maintien comporte un bossage en saillie en direction de l'espace de logement, formant une forme d'emboîtement, et la première partie plane du premier élément est délimitée par une bordure, et porte un orifice, formant la forme complémentaire, propre à recevoir le bossage de l'organe de maintien.
- L'organe de maintien comprend au moins une languette élastique, formant une forme d'emboîtement, et comportant au moins un coude, et la première partie plane du premier élément est délimitée par une bordure, ladite bordure étant prolongée par un rebord sensiblement perpendiculaire à la première partie plane, ledit rebord formant la forme complémentaire, propre à coopérer avec le coude de la languette élastique.
- L'ensemble comprend une tôle plane de fixation, fixée en contact d'une surface inférieure de la première partie plane, le rebord étant porté par la tôle plane de fixation.
- L'organe de maintien est relié à la première partie plane par la liaison pivot, et cet organe de maintien est mobile en rotation autour de cette liaison pivot entre : une position de dégagement, dans laquelle la branche supérieure de la partie de pincement est à l'écart de ladite première partie plane, et dans laquelle la forme d'emboîtement est propre à entrer en butée avec la bordure ou un prolongement de cette bordure, et une position d'engagement, dans laquelle la première partie plane est engagée dans l'espace de logement, et dans laquelle la forme d'emboîtement coopère avec la forme complémentaire.
- La première partie plane de fixation porte un élément tubulaire de vissage, sensiblement cylindrique, comprenant une surface intérieure taraudée et une surface extérieure munie d'une rainure circonférentielle, et le manchon de la partie de liaison de l'organe de maintien est encliqueté autour dudit élément tubulaire de vissage, chaque patte d'encliquetage étant encliquetée dans la rainure circonférentielle.
- L'ensemble comprend une tôle plane de fixation, fixée en contact d'une surface inférieure de la première partie plane, l'orifice de réception du bossage de l'organe de maintien étant ménagé dans cette tôle plane.
- L'élément tubulaire de vissage est enchâssé dans un orifice d'enchâssement complémentaire ménagé dans la tôle plane, cet orifice d'enchâssement étant délimité par un contour inséré dans la rainure circonférentielle de l'élément tubulaire de vissage, et la première partie plane comporte une ouverture traversante ménagée en regard dudit orifice d'enchâssement.

L'invention sera mieux comprise à la lecture de la description qui va suivre, donnée uniquement à titre d'exemple et faite en se référant aux figures annexées, parmi lesquelles :
- la figure 1 est une vue en perspective d'un ensemble d'un premier élément de carrosserie de véhicule automobile, tel qu'une peau de pare-chocs, et d'un organe de maintien selon un exemple de mode de réalisation de l'invention ;
- la figure 2 est une vue en perspective représentant partiellement certains éléments de l'ensemble de la figure 1, notamment l'organe de maintien représenté dans une position de dégagement ;
- la figure 3 est une vue similaire à la figure 2, représentant les éléments de la figure 2, parmi lesquels l'organe de maintien est représenté dans une position d'engagement ;
- la figure 4 est une vue de dessous d'une liaison pivot entre l'organe de maintien et le premier élément de carrosserie de l'ensemble de la figure 1 ;
- la figure 5 est une vue en coupe selon les flèches V-V de la liaison pivot de la figure 4 ;
- la figure 6 est une vue en perspective de l'ensemble de la figure 1 et d'un second élément de carrosserie de véhicule automobile, maintenu contre le premier élément de carrosserie par l'organe de maintien en position d'engagement ;
- la figure 7 est une vue en coupe transversale de l'ensemble et du second élément de carrosserie de la figure 6 ;
- la figure 8 est une vue de dessous des éléments de la figure 2 ; et
- la figure 9 est une vue similaire à la figure 8 des éléments de la figure 3.

On a représenté, sur la figure, 1 un ensemble 10 comprenant un premier élément 12, notamment un premier élément de carrosserie de véhicule automobile. Dans l'exemple représenté, le premier élément 12 est une peau de pare-chocs, et sera donc dénommée « peau de pare-chocs » dans la description qui va suivre.

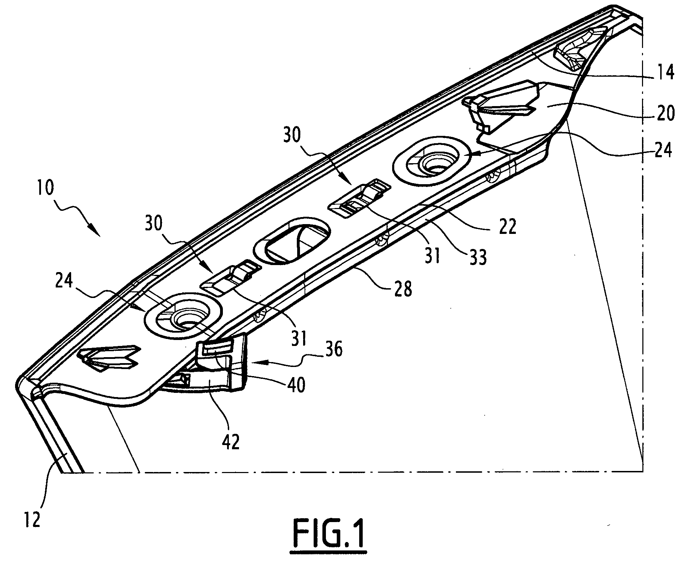

Sur cette figure 1, la peau de pare-chocs 12 est représentée partiellement. En particulier, seule une partie latérale de la peau de pare-chocs 12 est représentée.

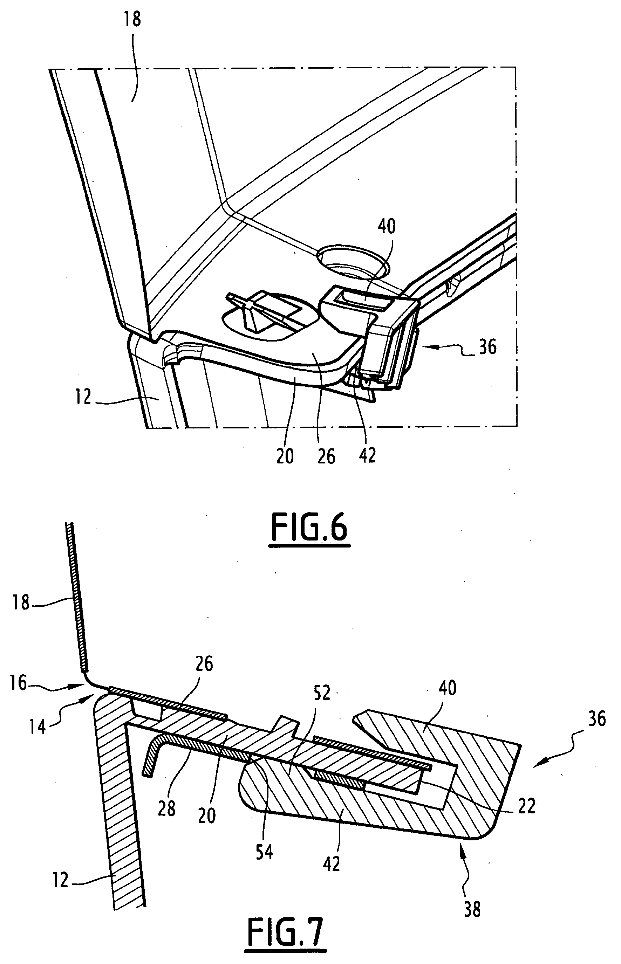

La peau de pare-chocs 12 comprend notamment, dans cette partie latérale, une première arête latérale 14 destinée à affleurer une seconde arête latérale 16 d'un second élément 18 du véhicule automobile, tel que cela sera décrit ultérieurement, notamment en référence aux figures 6 et 7.

Dans l'exemple décrit, le second élément 18 est un second élément de carrosserie du véhicule automobile, notamment une aile. Dans ce qui suit, le second élément 18 sera donc dénommé « aile 18 ».

La peau de pare-chocs 12 comporte, à proximité de l'arête 14, une première partie plane de fixation 20, s'étendant vers l'intérieur sensiblement perpendiculairement à la peau de pare-chocs 12. Cette première partie plane de fixation 20 s'étend en longueur le long de la première arête 14, et en largeur depuis cette première arête 14 jusqu'à une bordure 22 délimitant latéralement cette première partie plane de fixation 20.

Par ailleurs, la première partie plane 20 comporte au moins un orifice traversant 24 de fixation, dont la fonction sera décrite plus en détail ultérieurement.

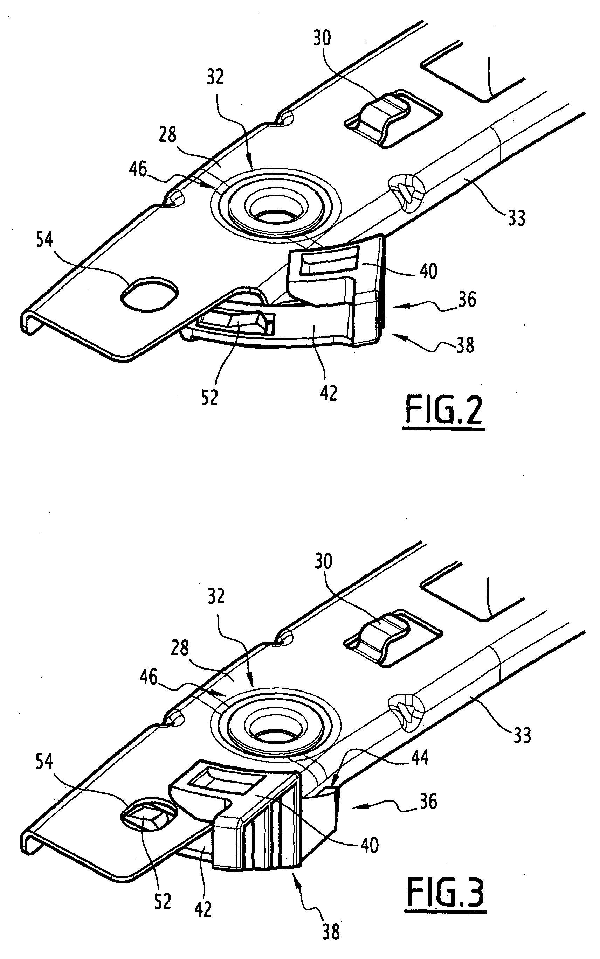

De manière connue en soi, l'ensemble 10 comprend une tôle plane de fixation 28, également appelée « romaine », fixée à la première partie plane 20 en contact d'une surface inférieure de cette première partie plane 20. A cet effet, la tôle de fixation 28 comporte des languettes 30 destinées à coopérer avec des orifices complémentaires 31 ménagés dans la première partie plane 20. La tôle plane de fixation 28 est représentée plus en détail sur les figures 2 et 3.

La tôle plane de fixation 28 comporte, à l'une de ses extrémités latérales, un rebord 33 s'étendant sensiblement perpendiculairement à un plan dans lequel s'étend la première partie plane 20. Ce rebord 33 est agencé à la même extrémité latérale que la bordure 22, de sorte que la bordure 22 est prolongée par ce rebord 33 lorsque la tôle de fixation 28 est rapportée sur la première partie plane 20.

Cette tôle plane de fixation 28 est notamment destinée à porter des éléments de fixation, pour la fixation de la première partie plane 20 sur une seconde partie plane 26 complémentaire de l'aile 18.

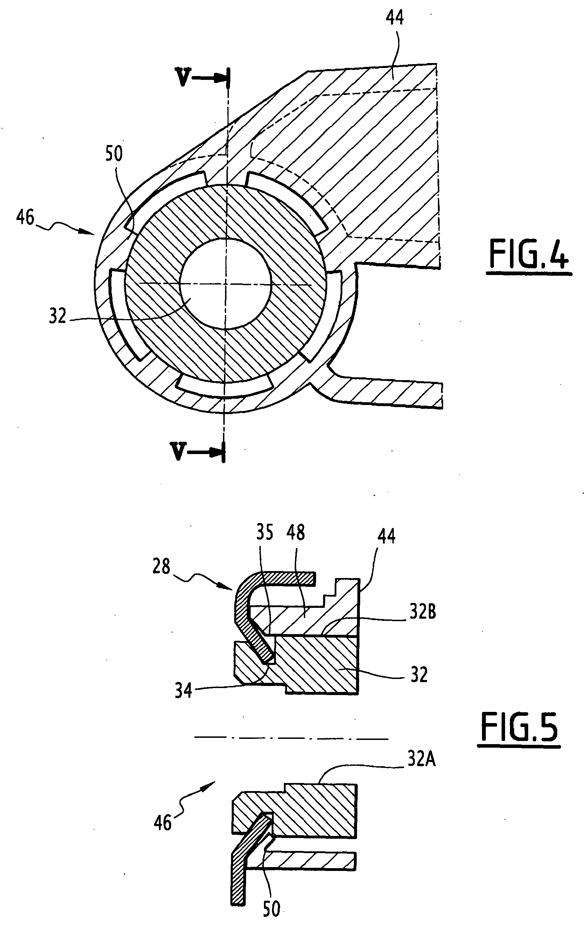

En particulier, la tôle de fixation 28 porte au moins un élément tubulaire de vissage 32, sensiblement cylindrique, représenté plus en détail sur la figure 5. L'élément tubulaire de vissage 32 présente une surface intérieure taraudée 32A et une surface extérieure 32B.

Avantageusement, cet élément tubulaire de vissage 32 est enchâssé dans un orifice d'enchâssement complémentaire 34 ménagé dans la tôle de fixation 28. Cet orifice d'enchâssement est délimité par un contour, ce contour étant inséré dans une rainure circonférentielle 35 ménagée sur la surface extérieure 32B de l'élément tubulaire de vissage 32, comme cela est représenté sur la figure 5.

La tôle de fixation 28 est agencée sur la première partie plane 20 de sorte que chaque orifice traversant 24 soit disposé en regard d'un orifice d'enchâssement 34 correspondant, pour que chaque élément tubulaire de vissage 32 soit accessible à travers un orifice traversant 24 correspondant.

De manière classique, la seconde partie plane 26 de l'aile 18 comporte également une ouverture traversante destinée à être disposée en regard de l'ouverture traversante 24, afin de permettre le passage d'une vis de fixation jusqu'à l'élément tubulaire de vissage 32, pour le vissage des première 20 et seconde 26 parties planes l'une contre l'autre.

Lors du montage d'un véhicule automobile, ce vissage des première 20 et seconde 26 parties planes l'une contre l'autre est généralement réalisé ultérieurement à l'agencement de ces première 20 et seconde 26 parties planes l'une contre l'autre, plus loin sur la chaîne de montage. Ainsi, il est nécessaire de maintenir ces première 20 et seconde 26 parties planes l'une contre l'autre préalablement au vissage.

A cet effet, l'ensemble 10 comporte un organe 36 de maintien de la première partie plane 20 contre la seconde partie plane 26.

L'organe de maintien 36 comporte une partie de pincement 38, présentant une section en forme de U, et comprenant une branche supérieure 40 et une branche inférieure 42 définissant entre elles un espace de logement pour les première 20 et seconde 26 parties planes. Avantageusement, la branche supérieure 40 présente une longueur inférieure à celle de la branche inférieure 42.

L'organe de maintien 36 comporte par ailleurs une partie de liaison 44, solidaire de la partie de pincement 38, et destinée à être reliée à la première partie plane 20 par une liaison pivot 46 d'axe perpendiculaire à un plan dans lequel s'étend sensiblement la première partie plane 20.

Cette partie de liaison 44 comporte un manchon 48, destiné à entourer l'élément tubulaire de vissage 32, comme cela est notamment représenté sur la figure 4 et 5. A cet effet, le manchon 48 comporte au moins une patte d'encliquetage 50, par exemple cinq pattes d'encliquetages 50, chacune étant propre à coopérer avec la rainure circonférentielle 35 ménagée sur la surface extérieure 32B de l'élément tubulaire 32.

Ainsi, le manchon 48 peut facilement être encliqueté autour de l'élément tubulaire de vissage 32, en encliquetant chaque patte d'encliquetage 50 dans ladite rainure circonférentielle 35. Le manchon 48 est alors maintenu sur l'élément tubulaire 32, en restant mobile en rotation autour de cet élément tubulaire 32. En d'autres termes, la liaison pivot 46 entre la première partie plane 20 et l'organe de maintien 36 est formée par le manchon 48 avec l'organe tubulaire 32.

On notera que la rainure circonférentielle 35 pré-éxiste indépendamment de l'organe de maintien 36, puisqu'elle permet l'enchâssement de l'élément tubulaire de vissage 32 dans la tôle de fixation 28. Ainsi, la fixation de l'organe de maintien 36 ne nécessite pas d'aménagement particulier sur la peau de pare choc 12 ou sur la tôle de fixation 28.

L'organe de maintien 36 est mobile en rotation autour de la liaison pivot 46, entre une position de dégagement (représentée sur les figures 1, 2 et 8), dans laquelle la branche supérieure 40 de la partie de pincement 38 est à l'écart de la première partie plane 20, et une position d'engagement (représentée sur les figures 3, 6, 7 et 9); dans laquelle la première partie plane est engagée dans l'espace de logement défini entre les branches 40, 42.

Afin d'empêcher le passage involontaire de l'organe de maintien 36 depuis l'une des positions de dégagement ou d'engagement vers l'autre de ces positions, l'organe de maintien 36. comporte au moins une forme d'emboîtement destinée à coopérer avec une forme complémentaire du premier élément 12.

En particulier, au moins l'une des branches 40, 42 de la partie de pincement 38 de l'organe de maintien 36 comporte une forme d'emboîtement formée par un bossage 52, en saillie en direction de l'espace de logement. Avantageusement, le bossage 52 est porté par la branche inférieure 42. Par ailleurs, la première partie plane 20 porte une forme complémentaire, formée par un orifice 54 propre à recevoir le bossage 52 de l'organe de maintien 36 en position d'engagement. Dans l'exemple décrit, l'orifice 54 est ménagé dans la tôle de fixation 28.

Ainsi, dans la position de dégagement, la partie de pincement 38 est à l'écart de la première partie plane 20, si bien que le bossage 52 est propre à entrer en butée avec la bordure 22 de cette première partie plane 20. Le bossage 52 permet alors de maintenir l'organe de maintien 36 dans sa position de dégagement tant qu'un effort, suffisant pour que le bossage 52 surpasse la bordure 22, n'est pas appliqué à l'organe de maintien 36.

Dans cette position de dégagement, notamment représentée sur la figure 1, la branche supérieure 40 est à l'écart de la première partie plane 20, et ne forme donc pas un obstacle pour l'accostage de la seconde partie plane 26 contre la première partie plane 20.

Une fois la seconde partie plane 26 accostée contre la première partie plane 20, comme cela est notamment représenté sur les figures 6 et 7, un effort est appliqué par l'utilisateur à l'organe de maintien 36 pour le faire pivoter vers sa position d'engagement, de sorte que le bossage 52 surpasse la bordure 22 jusqu'à être engagé dans l'orifice 54.

Dans cette position d'engagement, les première 20 et seconde 26 parties planes sont disposées dans le logement entre les branches 40 et 42, et ainsi maintenues l'une contre l'autre par pincement entre ces première 40 et seconde 42 branches de l'organe de maintien 36.

La peau de pare choc 12 et l'aile 18 peuvent ainsi être maintenues en position l'un contre l'autre, jusqu'à leur vissage dans une étape ultérieure de montage du véhicule automobile.

On notera que, du fait du bossage 52 engagé dans l'orifice 54, l'organe de maintien 36 est maintenu dans sa position d'engagement tant qu'un effort, suffisant pour que le bossage 52 sorte de l'orifice 54, n'est pas appliqué à l'organe de maintien 36.

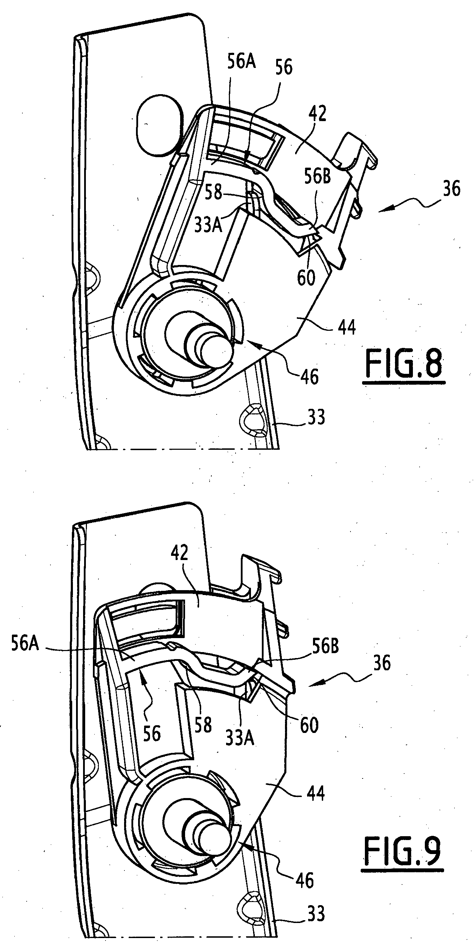

Avantageusement, comme cela est représenté sur les figures 8 et 9, l'organe de maintien 36 comporte une autre forme d'emboîtement, formée par une languette élastique 56.

Cette languette élastique 56 s'étend sensiblement parallèlement à une direction tangentielle définie sur le manchon 48, entre une extrémité 56A liée à l'organe de maintien 36, et une extrémité 56B libre. En d'autres termes, la languette élastique 56 s'étend sensiblement tangentiellement à une direction curviligne de pivotement autour de la liaison pivot 46.

La languette élastique 56 comprend au moins un coude entre ses extrémités liée 56A et libre 56B. En particulier, dans l'exemple représenté, la languette élastique 56 comporte un premier coude 58, tourné vers l'extrémité liée 56A, et un second coude 60, tourné vers l'extrémité libre 56B.

Par ailleurs, la première partie plane 20 porte une forme complémentaire à la forme d'emboîtement 56, formée par une extrémité 33A du rebord 33 de la tôle de fixation 28.

Dans la position de dégagement, la languette élastique 56, notamment son premier coude 58, est propre à entrer en butée avec la bordure 22 de cette première partie plane 20, notamment avec le rebord 33 porté par cette bordure 22, et plus particulièrement avec l'extrémité 33A de ce rebord 33.

Le premier coude 58 permet alors de maintenir l'organe de maintien 36 dans sa position de dégagement tant qu'un effort, suffisant pour que le premier coude 58 surpasse l'extrémité 33A du rebord 33, n'est pas appliqué à l'organe de maintien 36.

Comme indiqué précédemment, dans cette position de dégagement, notamment représentée sur les figures 1 et 8, la branche supérieure 40 est à l'écart de la première partie plane 20, et ne forme donc pas un obstacle pour l'accostage de la seconde partie plane 26 contre la première partie plane 20.

Une fois la seconde partie plane 26 accostée contre la première partie plane 20, comme cela est notamment représenté sur les figures 6 et 7, un effort est appliqué par l'utilisateur à l'organe de maintien 36 pour le faire pivoter vers sa position d'engagement, de sorte que le premier coude 58 surpasse l'extrémité 33A du rebord 33, par élasticité de la languette 56, jusqu'à ce que le second coude 60 se retrouve de l'autre côté du rebord 33. Ce second coude 60 se retrouve donc en butée contre l'extrémité 33A du rebord 33, pour empêcher l'organe de maintien 36 de s'éloigner de sa position d'engagement, comme cela est notamment représenté sur la figure 9.

Comme indiqué précédemment, dans cette position d'engagement, les première 20 et seconde 26 parties planes sont disposées dans le logement entre les branches 40 et 42, et ainsi maintenues l'une contre l'autre par pincement entre ces première 40 et seconde 42 branches de l'organe de maintien 36.

La peau de pare choc 12 et l'aile 18 peuvent ainsi être maintenues en position l'un contre l'autre, jusqu'à leur vissage dans une étape ultérieure de montage du véhicule automobile.

On notera que la forme d'emboîtement formée par une languette 56 disposée tangentiellement, au pivotement de l'organe de maintien 36 a pour avantage de n'appliquer des efforts à cet organe de maintien 36 que perpendiculairement à l'axe de la liaison pivot 46. Ainsi, ces efforts ne risquent pas d'entraîner la séparation de l'organe de maintien 36 d'avec l'élément tubulaire 32, une telle séparation ne pouvant être effectuée que parallèlement à cet axe de la liaison pivot 46.

Il apparaît clairement que l'organe de maintien 36 selon l'invention est peu encombrant, et qu'il peut être rapporté sur la première partie plane 20 sans modification de celui-ci, puisqu'il est rapporté sur l'organe tubulaire 32 pré-éxistant.

On notera que l'invention n'est pas limitée au mode de réalisation précédemment décrit, mais pourrait présenter diverses variantes sans sortir du cadre des revendications.

En particulier, bien que l'organe de maintien 36 décrit précédemment comporte deux formes d'emboîtement 52, 56, on peut prévoir un organe de maintien 36 comportant uniquement le bossage 52, ou uniquement la languette 56.

On peut également prévoir d'autres formes d'emboîtement adaptées.

## Revendications

1. Organe (36) de maintien d'une première partie plane de fixation (20) d'un premier élément (12), notamment d'un premier élément de carrosserie de véhicule automobile, contre une seconde partie plane de fixation (26) complémentaire d'un second élément (18), notamment d'un second élément de carrosserie de véhicule automobile, l'organe de maintien (36) comportant une partie de pincement (38) présentant une section en forme de U, comprenant une branche supérieure (40) et une branche inférieure (42) définissant entre elles un espace de logement pour les première (20) et seconde (26) parties planes, dans lequel :
- l'organe de maintien (36) comporte une partie (44) de liaison avec la première partie plane (20), destinée à être reliée à cette première partie plane (20) par une liaison pivot (46) d'axe perpendiculaire à un plan dans lequel s'étend sensiblement ladite première partie plane (20),
- l'organe de maintien (36) comporte au moins une forme d'emboîtement (52, 56), destinée à coopérer avec une forme complémentaire (54, 33A) prédéterminée du premier élément (12),
**caractérisé en ce que** la partie de liaison (44) comporte un manchon (48), destiné à entourer un élément tubulaire (32) porté par la première partie plane (20), le manchon (48) comportant au moins une patte d'encliquetage (50) propre à coopérer avec une rainure circonférentielle (35) complémentaire ménagée sur l'élément tubulaire (32).

2. Organe de maintien (36) selon la revendication 1, dans lequel au moins l'une des branches (40, 42) de la partie de pincement (38) de l'organe de maintien (36) comporte un bossage (52) en saillie en direction de l'espace de logement, formant une forme d'emboîtement.

3. Organe de maintien (36) selon la revendication 1 ou 2, dans lequel la branche supérieure (40) présente une longueur inférieure à celle de la branche inférieure (42), le bossage étant porté par ladite branche inférieure (42).

4. Organe de maintien (36) selon l'une quelconque des revendications précédentes, comprenant au moins une languette élastique (56), formant une forme d'emboîtement.

5. Organe de maintien (36) selon la revendication 4, dans lequel la languette élastique comprend au moins un coude (58, 60), destiné à coopérer avec la forme complémentaire (33A) du premier élément (12).

6. Organe de maintien (36) selon la revendication 4 ou 5, dans lequel la languette (56) s'étend sensiblement parallèlement à une direction tangentielle définie sur le manchon (48).

7. Ensemble (10) d'un premier élément (12), notamment un premier élément de carrosserie de véhicule automobile, tel qu'une peau de pare-chocs, et d'un organe de maintien (36) selon l'une quelconque des revendications 1 à 6, dans lequel le premier élément (12) comporte la première partie plane de fixation (20), et comporte au moins une forme (54, 33A) complémentaire de chaque forme d'emboîtement (52, 56).

8. Ensemble (10) selon la revendication 7, dans lequel :
- au moins l'une des branches (40, 42) de la partie de pincement (38) de l'organe de maintien (36) comporte un bossage (52) en saillie en direction de l'espace de logement, formant une forme d'emboîtement, et
- la première partie plane (20) du premier élément (12) est délimitée par une bordure (22), et porte un orifice (54), formant la forme complémentaire, propre à recevoir le bossage (52) de l'organe de maintien (36).

9. Ensemble (10) selon la revendication 7 ou 8, dans lequel :
- l'organe de maintien (36) comprend au moins une languette élastique (56), formant une forme d'emboîtement, et comportant au moins un coude (60),
- la première partie plane (20) du premier élément (12) est délimitée par une bordure (22), ladite bordure (22) étant prolongée par un rebord (33) sensiblement perpendiculaire à la première partie plane (20), ledit rebord (33) formant la forme complémentaire, propre à coopérer avec le coude (60) de la languette élastique.

10. Ensemble (10) selon la revendication 9, comprenant une tôle plane de fixation (28), fixée en contact d'une surface inférieure de la première partie plane (20), le rebord (33) étant porté par la tôle plane de fixation (28).

11. Ensemble (10) selon l'une quelconque des revendications 7 à 10, dans lequel l'organe de maintien (36) est relié à la première partie plane (20) par la liaison pivot (46), et cet organe de maintien (36) est mobile en rotation autour de cette liaison pivot (46) entre :
- une position de dégagement, dans laquelle la branche supérieure (40) de la partie de pincement (38) est à l'écart de ladite première partie plane (20), et dans laquelle la forme d'emboîtement (52, 56) est propre à entrer en butée avec la bordure (22) ou un prolongement (33) de cette bordure (22), et
- une position d'engagement, dans laquelle la première partie plane (20) est engagée dans l'espace de logement, et dans laquelle la forme d'emboîtement (52, 56) coopère avec la forme complémentaire (54, 33A).

12. Ensemble (10) selon l'une quelconque des revendications 7 à 11, dans lequel :
- la première partie plane de fixation (20) porte un élément tubulaire de vissage (32), sensiblement cylindrique, comprenant une surface intérieure taraudée (32A) et une surface extérieure (32B) munie d'une rainure circonférentielle (35), et
- le manchon (48) de la partie de liaison (44) de l'organe de maintien (36) est encliqueté autour dudit élément tubulaire de vissage (32), chaque patte d'encliquetage (50) étant encliquetée dans la rainure circonférentielle (35).

13. Ensemble (10) selon l'une quelconque des revendications 7 à 12, comprenant une tôle plane de fixation (28), fixée en contact d'une surface inférieure de la première partie plane (20), l'orifice (54) de réception du bossage (52) de l'organe de maintien (36) étant ménagé dans cette tôle plane (28).

14. Ensemble (10) selon les revendications 12 et 13 prises en combinaison, dans lequel :
- l'élément tubulaire de vissage (32) est enchâssé dans un orifice d'enchâssement (34) complémentaire ménagé dans la tôle plane de fixation (28), cet orifice d'enchâssement (34) étant délimité par un contour inséré dans la rainure circonférentielle (35) de l'élément tubulaire de vissage (32), et
- la première partie plane (20) comporte une ouverture traversante (24) ménagée en regard dudit orifice d'enchâssement (34).

## Patentansprüche

1. Organ (36) zum Halten eines ersten ebenen BefestigungsAbschnitts (20) eines ersten Elements (12), insbesondere eines ersten Karosserieelements eines Kraftfahrzeugs, gegen einen komplementären, zweiten ebenen Befestigungs-Abschnitt (26) eines zweiten Elements (18), insbesondere eines zweiten Karosserieelements eines Kraftfahrzeugs, wobei das Halte-Organ (36) einen Klemmabschnitt (38) aufweist, der einen Querschnitt in U-Form hat und der aufweist einen oberen Bereich (40) und einen unteren Bereich (42), die zwischen sich einen Unterbringungsraum für den ersten (20) und den zweiten (26) ebenen Abschnitt definieren, wobei:
- das Halte-Organ (36) aufweist einen Abschnitt (44) zur Verbindung mit dem ersten ebenen Abschnitt (20) und der dazu vorgesehen ist, mit diesem ersten ebenen Abschnitt (20) verbunden zu sein über eine Drehzapfenverbindung (46) mit einer Achse, die senkrecht ist zu einer Ebene, in welcher sich der besagte erste ebene Abschnitt (20) im Wesentlichen erstreckt,
- das Halte-Organ (36) wenigstens eine Raste-Formung (52, 56) aufweist, die dazu vorgesehen ist, um mit einer komplementären Formung (54, 33A) zusammenzuwirken, die von dem ersten Element (12) vorgegeben ist,
**dadurch gekennzeichnet, dass** der Verbindungs-Abschnitt (44) eine Muffe (48) aufweist, die dazu bestimmt ist, um ein rohrförmiges Element (32) zu umgeben, das von dem ersten ebenen Abschnitt (20) getragen ist, wobei der Stutzen (48) wenigstens eine Sperrklaue (50) aufweist, die in der Lage ist, mit einer komplementären Umfangsnut (35) zusammenzuwirken, die in dem rohrförmigen Element (32) ausgebildet ist.

2. Halte-Organ (36) gemäß Anspruch 1, wobei wenigstens einer der Bereiche (40, 42) des Klemmabschnitts (38) des Halte-Organs (36) einen Buckel (52) aufweist, der in Richtung des Unterbringungsraums vorsteht, bildend eine Rast-Formung.

3. Halte-Organ (36) gemäß Anspruch 1 oder 2, wobei der obere Bereich (40) eine Länge hat, die kleiner ist als jene des unteren Bereichs (42), wobei der Buckel von dem besagten unteren Bereich (42) getragen wird.

4. Halte-Organ (36) gemäß irgendeinem der vorhergehenden Ansprüche, aufweisend wenigstens eine elastische Zunge (56), die eine Rast-Formung bildet.

5. Halte-Organ (36) gemäß Anspruch 4, wobei die elastische Zunge wenigstens eine Biegung (58, 60) aufweist, die dazu vorgesehen ist, um mit der komplementären Formung (33A) des ersten Elements (12) zusammenzuwirken.

6. Halte-Organ (36) gemäß Anspruch 4 oder 5, wobei die Zunge (56) sich im Wesentlichen parallel zu einer tangentialen Richtung erstreckt, die an der Muffe (48) definiert ist.

7. Einrichtung (10) aus einem ersten Element (12), insbesondere einem ersten Karosserie-Element eines Kraftfahrzeugs, wie z.B. einer Stoßfänger-Außenhaut, und einem Halte-Organ (36) gemäß irgendeinem der Ansprüche 1 bis 6, wobei das erste Element (12) den ersten ebenen Befestigungs-Abschnitt (20) aufweist und zumindest eine Formung (54, 33A) aufweist, die komplementär zu jeder Raste-Formung (52, 56) ist.

8. Einrichtung (10) gemäß Anspruch 7, wobei:
- wenigstens einer der Bereiche (40, 42) des Klemmabschnitts (38) des Halte-Organs (36) einen Buckel (52) aufweist, der in Richtung zu dem Unterbringungsraum vorsteht, bildend eine Raste-Formung, und
- der erste ebene Abschnitt (20) des ersten Elements (12) von einer Umrandung (22) begrenzt ist und eine Öffnung (54) trägt, bildend die komplementäre Formung und in der Lage, den Buckel (52) des Halte-Organs (36) aufzunehmen.

9. Einrichtung (10) gemäß Anspruch 7 oder 8, wobei
- das Halte-Organ (36) wenigstens eine elastische Zunge (56) aufweist, bildend eine Raste-Formung und aufweisend wenigstens eine Biegung (60),
- der erste ebene Abschnitt (20) des ersten Elements (12) von einer Umrandung (22) begrenzt ist, wobei die besagte Umrandung (22) von einem Sims (33) verlängert ist, der im Wesentlichen senkrecht zu dem ersten ebenen Abschnitt (20) ist, wobei der besagte Sims (33) die komplementäre Formung bildet, in der Lage mit der Biegung 60) der elastischen Zunge zusammenzuwirken.

10. Einrichtung (10) gemäß Anspruch 9, aufweisend ein ebenes Befestigungsblech (28), das im Kontakt mit einer unteren Fläche des ersten ebenen Abschnitts (20) befestigt ist, wobei der Sims (33) von dem ebenen Befestigungsblech (28) getragen ist.

11. Einrichtung (10) gemäß irgendeinem der Ansprüche 7 bis 10, wobei das Halte-Organ (36) mit dem ersten ebenen Abschnitt (20) über die Drehzapfenverbindung (46) verbunden ist, und wobei dieses Halte-Organ (36) rotationsbewegbar ist um diese Drehzapfenverbindung (46) zwischen:
- einer Außer-Eingriff-Position, in welcher der obere Bereich (40) des Klemmabschnitts (38) im Abstand von dem besagten ersten Abschnitt (20) ist und in welcher die Raste-Formung (52, 56) in der Lage ist, mit der Umrandung (22) oder einer Verlängerung (33) dieser Umrandung (22) in Anschlag zu treten, und
- einer Eingriff-Position, in welcher der erste ebene Abschnitt (20) in den Unterbringungsraum eingreift und in welcher die Raste-Formung (52, 56) mit der komplementären Form zusammenwirkt.

12. Einrichtung (10) gemäß irgendeinem der Ansprüche 7 bis 11, wobei:
- der erste ebene Befestigungs-Abschnitt (20) ein rohrförmiges Schrauben-Element (32) trägt, das im Wesentlichen zylindrisch ist, aufweisend eine mit Gewinde versehene Innenfläche (32A) und eine Außenfläche (32B), die mit einer Umfangsnut (35) versehen ist, und
- die Muffe (48) des Verbindungs-Abschnitts (44) des Halteorgans (36) um das besagte rohrförmige Schrauben-Element (32) herum gerastet ist, wobei jede Sperrklaue (50) in die Umfangsnut (35) eingerastet ist.

13. Einrichtung (10) gemäß irgendeinem der Ansprüche 7 bis 12, aufweisend ein ebenes Befestigungsblech (28), das in Kontakt mit einer unteren Fläche des ersten ebenen Abschnitts (20) befestigt ist, wobei die Öffnung (54) zur Aufnahme des Buckels (52) des Halte-Organs (36) in diesem ebenen Blech (28) ausgebildet ist.

14. Einrichtung (10) gemäß den Ansprüchen 12 und 13 in Kombination, wobei:
- das rohrförmige Schrauben-Element (32) in einer komplementären Einfassungsöffnung (34) eingelassen ist, die in dem ebenen Befestigungs-Blech (28) ausgebildet ist, wobei diese Einfassungsöffnung (34) begrenzt ist von einer Kontur, die in die Umfangsnut (35) des rohrförmigen Schrauben-Elements (32) eingefügt ist, und
- der erste ebene Abschnitt (20) eine Durchgangsöffnung (24) aufweist, die gegenüber der besagten Einfassungsöffnung (34) ausgebildet ist.

## Claims

1. A component (36) for holding a first flat attachment part (20) of a first element (12), particularly a first bodywork element of a motor vehicle, against a second matching flat attachment part (26) of a second element (18), particularly a second bodywork element of a motor vehicle, said holding component (36) comprising a clip part (38) having a U-shaped section, comprising an upper branch (40) and a lower branch (42) together defining an area for receiving said first (20) and second (26) flat parts, wherein:
- said holding component (36) comprises a part (44) for linking with said first flat part (20), which part (44) is intended to be connected to said first flat part (20) via a pivot link (46) with an axis perpendicular to a plane in which said first flat part (20) substantially extends;
- said holding component (36) comprises at least one catch shape (52, 56) intended to cooperate with a predetermined matching shape (54, 33A) of said first element (12),
**characterised in that** said linking part (44) comprises a sleeve (48) intended to surround a tubular element (32) supported by said first flat part (20), said sleeve (48) comprising at least one catching tab (50) designed to cooperate with a matching circumferential groove (35) arranged on said tubular element (32).

2. The holding component (36) according to claim 1, wherein at least one of said branches (40, 42) of said clip part (38) of said holding component (36) comprises a boss (52) projecting towards the reception area, forming a catch shape.

3. The holding component (36) according to claim 1 or 2, wherein said upper branch (40) is shorter than said lower branch (42), said boss being supported by said lower branch (42).

4. The holding component (36) according to any one of the preceding claims, comprising at least one flexible tongue (56) forming a catch shape.

5. The holding component (36) according to claim 4, wherein said flexible tongue comprises at least one elbow (58, 60) intended to cooperate with the matching shape (33A) of said first element (12).

6. The holding component (36) according to claim 4 or 5, wherein said tongue (56) extends substantially parallel to a tangential direction defined on said sleeve (48).

7. An assembly (10) of a first element (12), particularly a first bodywork element of a motor vehicle, such as a bumper skin, and a holding component (36) according to any one of claims 1 to 6, wherein said first element (12) comprises said first flat attachment part (20) and comprises at least one matching shape (54, 33A) for each catch shape (52, 56).

8. The assembly (10) according to claim 7, wherein:
- at least one of said branches (40, 42) of said clip part (38) of said holding component (36) comprises a boss (52) projecting towards the reception area, forming a catch shape; and
- said first flat part (20) of said first element (12) is demarcated by an edge (22) and is provided with a hole (54) forming the matching shape designed to receive said boss (52) of said holding component (36).

9. The assembly (10) according to claim 7 or 8, wherein:
- said holding component (36) comprises at least one flexible tongue (56) forming a catch shape and comprising at least one elbow (60);
- said first flat part (20) of said first element (12) is demarcated by an edge (22), said edge (22) being extended by a lip (33) substantially perpendicular to said first flat part (20), said lip (33) forming the matching shape designed to cooperate with said elbow (60) of said flexible tongue.

10. The assembly (10) according to claim 9, comprising a flat attachment plate (28) attached against a lower surface of said first flat part (20), said lip (33) being supported by said flat attachment plate (28).

11. The assembly (10) according to any one of claims 7 to 10, wherein said holding component (36) is connected to said first flat part (20) via said pivot link (46), and said holding component (36) is rotationally mobile about said pivot link (46) between:
- a release position, in which said upper branch (40) of said clip part (38) is spaced apart from said first flat part (20) and in which said catch shape (52, 56) is designed to come into abutment with said edge (22) or with an extension (33) of said edge (22); and
- an engaged position, in which said first flat part (20) is engaged in the reception area, and in which said catch shape (52, 56) cooperates with said matching shape (54, 33A).

12. The assembly (10) according to any one of claims 7 to 11, wherein:
- said first flat attachment part (20) is provided with a substantially cylindrical tubular screwing element (32) comprising a tapped internal surface (32A) and an external surface (32B) provided with a circumferential groove (35); and
- said sleeve (48) of said linking part (44) of said holding component (36) is clicked-in about said tubular screwing element (32), with each catching tab (50) being clicked into said circumferential groove (35).

13. The assembly (10) according to any one of claims 7 to 12, comprising a flat attachment plate (28) attached against a lower surface of said first flat part (20), with said hole (54) for receiving said boss (52) of said holding component (36) being provided in said flat plate (28).

14. The assembly (10) according to claims 12 and 13 taken in combination, wherein:
- said tubular screwing element (32) is mounted in a matching mounting hole (34) provided in said flat attachment plate (28), said mounting hole (34) being demarcated by a contour inserted into said circumferential groove (35) of said tubular screwing element (32); and
- said first flat part (20) comprises a through opening (24) provided opposite said mounting hole (34).
